# FASCICULE DE BREVET EUROPEEN

(11) **EP 2 682 824 B1**
(45) Date de publication et mention de la délivrance du brevet: **12.10.2016**
(21) Numéro de dépôt: 13175162.0
(22) Date de dépôt: 04.07.2013
(51) Int. Cl.: E06B 9/32, E06B 9/68

(54) **Procédé et dispositif de commande d'au moins un dispositif d'occultation d'au moins une ouverture d'une pièce d'un bâtiment**
Verfahren und Vorrichtung zur Steuerung mindestens einer Verdunkelungsvorrichtung für mindestens ein Öffnungselement eines Gebäudeteils
Method and device for controlling at least one device for concealing at least one opening of a room in a building

(30) Priorité: 06.07.2012 FR 1256500
(43) Date de publication de la demande: 08.01.2014
(60) Demande divisionnaire: 16153675.0
(73) Titulaire: Delta Dore, 35270 Bonnemain (FR)
(72) Inventeur: Le, Duc Minh Khang, 35270 Bonnemain (FR); Bourdais, Romain, 35270 Bonnemain (FR); Gueguen, Hervé, 35270 Bonnemain (FR); Plevin, Jacques, 35270 Bonnemain (FR)
(74) Mandataire: Le Guen-Maillet

(56) Documents cités:
- WO-A1-92/00557
- DE-A1-102004 005 962
- US-A1- 2007 156 256

## Description

La présente invention concerne un procédé et dispositif de commande d'au moins un dispositif d'occultation d'au moins une ouverture d'une pièce d'un bâtiment.

Plus particulièrement, l'invention se situe dans le domaine de la gestion de la température d'une pièce d'un bâtiment en contrôlant un dispositif d'occultation d'au moins une ouverture.

L'apport énergétique du rayonnement solaire est un élément non négligeable dans une pièce. Celui-ci contribue à réduire les besoins en énergie fossile ou électrique nécessaires au chauffage de la pièce en période hivernale mais peut contribuer à augmenter les besoins en énergie fossile ou électrique nécessaires au rafraichissement de la pièce en période estivale comme décrit dans le document US-A1-2007/0 156 256.

L'invention vise à optimiser l'apport énergétique du rayonnement solaire qui est un élément non négligeable dans une pièce de manière à garantir que les besoins en énergie fossile ou électrique nécessaires au chauffage de la pièce soient réduits.

Selon un premier aspect de l'invention, l'invention concerne un procédé de commande d'au moins un dispositif d'occultation d'au moins une ouverture d'une pièce d'un bâtiment, caractérisé en ce que le procédé comporte les étapes de :
- obtention de la température de la pièce du bâtiment,
- obtention d'une valeur du rayonnement solaire,
- comparaison de la température de la pièce du bâtiment avec au moins un seuil de température,
- détermination d'au moins un seuil de comparaison du rayonnement solaire à partir du résultat de la comparaison de la température de la pièce avec ledit au moins un seuil,
- comparaison de la valeur du rayonnement solaire obtenu avec au moins un seuil de comparaison du rayonnement solaire déterminé,
- commande du dispositif d'occultation en fonction de la comparaison du rayonnement solaire avec le seuil de comparaison du rayonnement solaire déterminé.

Corrélativement, l'invention concerne un dispositif de commande d'au moins un dispositif d'occultation d'au moins une ouverture d'une pièce d'un bâtiment, caractérisé en ce que le dispositif de commande comporte :
- des moyens d'obtention de la température de la pièce du bâtiment,
- des moyens d'obtention d'une valeur du rayonnement solaire,
- des moyens de comparaison de la température de la pièce du bâtiment avec au moins un seuil de température,
- des moyens de détermination d'au moins un seuil de comparaison du rayonnement solaire à partir du résultat de la comparaison de la température de la pièce avec ledit au moins un seuil,
- des moyens de comparaison de la valeur du rayonnement solaire obtenu avec au moins un seuil de comparaison du rayonnement solaire déterminé,
- des moyens de commande du dispositif d'occultation en fonction de la comparaison du rayonnement solaire avec le seuil de comparaison du rayonnement solaire déterminé.

Ainsi, en utilisant un seuil de comparaison du rayonnement solaire qui est dépendant d'une comparaison de la température de la pièce avec au moins un seuil, l'invention optimise l'apport énergétique du rayonnement solaire dans la pièce.

Selon un autre aspect de l'invention, la température de la pièce du bâtiment est comparée à deux seuils de température et les valeurs des seuils de température dépendent de la date à laquelle la température de la pièce du bâtiment et le rayonnement solaire sont obtenus.

Ainsi, la présente invention est adaptée aux différentes saisons.

Selon un autre aspect de l'invention, le seuil de comparaison du rayonnement solaire est en outre déterminé en fonction de la date à laquelle la température de la pièce du bâtiment et le rayonnement solaire sont obtenus.

Ainsi, la présente invention est adaptée aux différentes saisons.

Selon un autre aspect de l'invention, le seuil de comparaison du rayonnement solaire est en outre déterminé en fonction de l'heure à laquelle la température de la pièce du bâtiment et le rayonnement solaire sont obtenus.

Ainsi, la présente invention est adaptée aux variations journalières des conditions d'ensoleillement.

Selon un autre aspect de l'invention, le dispositif de commande, lorsque la date à laquelle la température de la pièce du bâtiment et le rayonnement solaire sont obtenus correspond à une période de fort ensoleillement :
- obtient la température extérieure du bâtiment à une heure prédéterminée de la journée,
- compare la température extérieure du bâtiment obtenue avec un seuil de comparaison de température extérieure,
et le dispositif d'occultation est commandé pour prendre trois positions dont deux positions sont dépendantes de la comparaison de la température extérieure du bâtiment obtenue avec le seuil de comparaison de température extérieure.

Ainsi, la présente invention est simple à mettre en oeuvre et garantit que l'apport lié au rayonnement solaire est optimal tant sur le plan de la luminosité de la pièce que sur le plan énergétique.

Selon un autre aspect de l'invention, le procédé est exécuté itérativement, le dispositif d'occultation est commandé pour prendre trois positions différentes et le procédé comporte en outre une étape d'annulation de la commande du dispositif d'occultation qui est dépendante de la position du dispositif d'occultation lors de la précédente itération et de la date d'obtention de la température de la pièce du bâtiment et de la valeur du rayonnement solaire.

Ainsi, la présente invention permet de réaliser une temporisation sur l'ouverture ou la fermeture du dispositif d'occultation qui peut varier au fil des saisons.

De plus, la présente invention est simple à mettre en oeuvre et garantit que l'apport lié au rayonnement solaire est optimal tant sur le plan de la luminosité de la pièce que sur le plan énergétique.

Selon un autre aspect de l'invention, si la date d'obtention de la température de la pièce du bâtiment et de la valeur du rayonnement solaire est comprise dans une période de fort ensoleillement, la commande du dispositif d'occultation est annulée pendant une période donnée si le dispositif d'occultation est, à l'itération précédente, dans une position permettant une quantité moins importante de rayonnement solaire de traverser l'ouverture que celle permise par la position du dispositif d'occultation dont la commande est annulée.

Ainsi, la présente invention diminue les apports énergiques liés au rayonnement solaire dans une période de fort ensoleillement telle que l'été et/ou la seconde moitié du printemps et/ou la première partie de l'automne.

Selon un autre aspect de l'invention, si la date d'obtention de la température de la pièce du bâtiment et de la valeur du rayonnement solaire est comprise dans une période de faible ensoleillement, la commande du dispositif d'occultation est annulée pendant une période donnée si le dispositif d'occultation est, à l'itération précédente, dans une position permettant une quantité plus importante de rayonnement solaire de traverser l'ouverture que celle permise par la position du dispositif d'occultation dont la commande est annulée.

Selon un autre aspect de l'invention, si le mode dans lequel le dispositif de commande de chauffage de la au moins une pièce est le mode de contrôle de chauffage, le procédé comporte en outre une étape de prise en compte de la température de consigne de la au moins une pièce et de modification d'au moins un seuil de température.

Ainsi, il est possible de prendre en compte les préférences de chauffage de l'habitant de l'habitation.

Selon un autre aspect de l'invention, on compte le nombre d'ouvertures ou de fermetures journalier du dispositif d'occultation d'au moins une ouverture d'une pièce du bâtiment et on limite le nombre d'ouvertures ou de fermetures journalier du dispositif d'occultation.

Ainsi, la durée de vie des moteurs entraînant l'ouverture ou la fermeture du dispositif d'occultation d'au moins une ouverture d'une pièce du bâtiment est augmentée.

Selon un autre aspect de l'invention, la température de la pièce (106) du bâtiment est comparée à deux seuils de température et les valeurs des seuils de température dépendent de la saison à laquelle la température de la pièce du bâtiment et le rayonnement solaire sont obtenus et la saison est déterminée à partir de la température mesurée à l'extérieur du bâtiment à une heure prédéterminée ou à une heure correspondant au lever du soleil.

Ainsi, la présente invention est particulièrement bien adaptée aux modifications de climat d'une saison d'une année sur l'autre.

Ainsi, la présente invention favorise en période de faible ensoleillement telle que l'hiver et/ou la première moitié du printemps et/ou la seconde moitié de l'automne les apports énergétiques du rayonnement solaire.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par au moins un système informatique.

Les avantages du système étant identiques à ceux précédemment mentionnés, ceux-ci ne seront pas rappelés.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 représente un bâtiment dans lequel la présente invention est implémentée ;
- la Fig. 2 représente un schéma bloc d'un dispositif de commande d'au moins un dispositif d'occultation d'au moins une ouverture selon la présente invention ;
- la Fig. 3 représente un exemple de courbe de variation du rayonnement solaire sur une période de vingt-quatre heures ainsi que des droites permettant la décision de la commande d'au moins un dispositif d'occultation d'au moins une ouverture selon la présente invention ;
- la Fig. 4 représente un diagramme illustrant l'algorithme général exécuté par le dispositif de commande d'au moins un dispositif d'occultation d'au moins une ouverture selon la présente invention ;
- la Fig. 5 représente un diagramme illustrant l'algorithme exécuté par le dispositif de commande pour l'exécution de la fonction criticité selon la présente invention ;
- la Fig. 6a représente un diagramme illustrant l'algorithme exécuté par le dispositif de commande pour la détermination, en période de fort ensoleillement, de la fonction paramètre volet permettant la décision de la commande d'au moins un dispositif d'occultation d'au moins une ouverture selon la présente invention ;
- la Fig. 6b représente un diagramme illustrant l'algorithme exécuté par le dispositif de commande pour la détermination, en période de faible ensoleillement, de la fonction paramètre volet permettant la décision de la commande d'au moins un dispositif d'occultation d'au moins une ouverture selon la présente invention ;
- la Fig. 7 représente un diagramme illustrant l'algorithme exécuté par le dispositif de commande pour la détermination d'un paramètre de décision de la commande d'au moins un dispositif d'occultation d'au moins une ouverture selon la présente invention ;
- la Fig. 8a représente un diagramme illustrant l'algorithme exécuté par le dispositif de commande pour la gestion, en période de faible ensoleillement, d'une temporisation pour la commande d'au moins un dispositif d'occultation d'au moins une ouverture selon la présente invention ;
- la Fig. 8b représente un diagramme illustrant l'algorithme exécuté par le dispositif de commande pour la gestion, en période de fort ensoleillement, d'une temporisation pour la commande d'au moins un dispositif d'occultation d'au moins une ouverture selon la présente invention ;
- la Fig. 9 représente un diagramme illustrant l'algorithme exécuté par le dispositif de commande pour la détermination, en période de fort ensoleillement, de différentes positions d'au moins un dispositif d'occultation d'au moins une ouverture selon la présente invention ;
- la Fig. 10 représente un diagramme illustrant l'algorithme exécuté par le dispositif de commande pour la détermination d'un paramètre de commande d'au moins un dispositif d'occultation d'au moins une ouverture selon la présente invention.

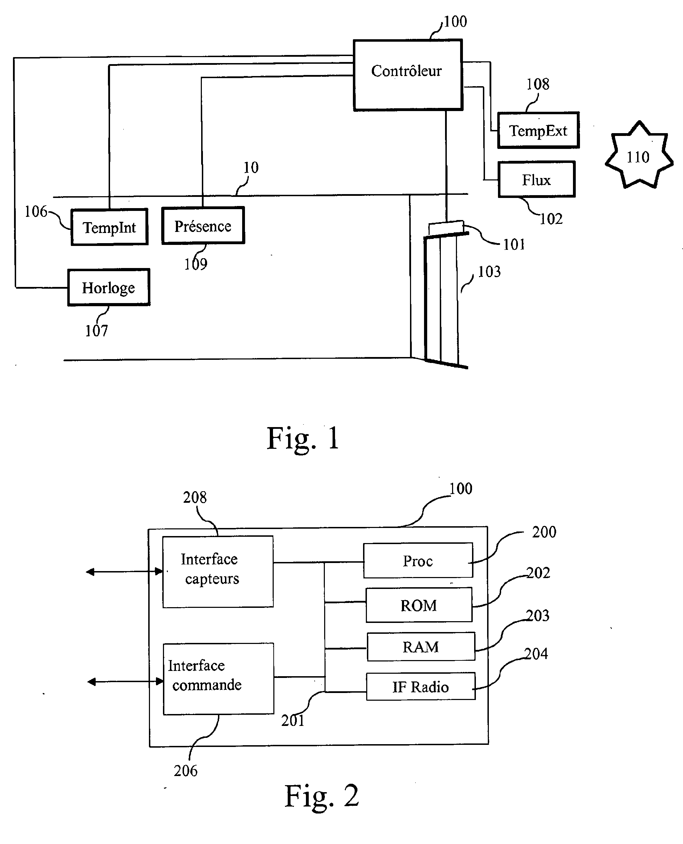

La **Fig. 1** représente un bâtiment dans lequel la présente invention est implémentée.

Le bâtiment comporte au moins une pièce 10 disposant d'au moins une ouverture 103 orientée dans une direction telle que le rayonnement solaire contribue au chauffage de la pièce 10.

L'ouverture 103 peut être occultée par un dispositif d'occultation 101 tel que par exemple un volet roulant motorisé 101 ou un store motorisé.

L'ouverture 103 est, dans un pignon du bâtiment par exemple et de manière non limitative, orientée au sud, à l'est ou au nord.

L'ouverture 103 peut aussi être une ouverture dans le toit du bâtiment par exemple et de manière non limitative orientée au sud, à l'est ou à l'ouest.

Selon la présente invention, un dispositif de commande 100, ou contrôleur, pilote le volet roulant 101.

Au contrôleur 100 sont reliés un capteur de rayonnement 102 du rayonnement du soleil 110, un capteur de température 108 placé à l'extérieur du bâtiment, un capteur de température 106 de la pièce 10 ou du bâtiment, une horloge 107 et éventuellement un capteur de présence 109.

L'horloge 107 est une horloge apte à fournir une information d'horodatage permettant de déterminer l'heure, le jour, et la saison.

Selon un mode particulier de la présente invention, la saison est déterminée à partir de la température mesurée par le capteur de température 108 à heure prédéterminée ou si l'horloge est une horloge astronomique à une heure correspondant au lever du soleil voire plus ou moins une heure.

L'heure prédéterminée à laquelle la température est mesurée par le capteur de température pour déterminer la saison est par exemple comprise entre 4 et 6 heures du matin, préférentiellement à 5 heures du matin.

Il est à remarquer que le contrôleur 100, l'horloge 107, le capteur de température 106 peuvent être regroupés en un unique dispositif de commande et de programmation.

Selon la présente invention, le dispositif de commande comporte :
- des moyens d'obtention de la température de la pièce du bâtiment,
- des moyens d'obtention d'une valeur du rayonnement solaire,
- des moyens de comparaison de la température de la pièce du bâtiment avec au moins un seuil de température,
- des moyens de détermination d'au moins un seuil de comparaison du rayonnement solaire à partir du résultat de la comparaison de la température de la pièce avec ledit au moins un seuil,
- des moyens de comparaison de la valeur du rayonnement solaire obtenu avec au moins un seuil de comparaison du rayonnement solaire déterminé,
- des moyens de commande du dispositif d'occultation en fonction de la comparaison du rayonnement solaire avec le seuil de comparaison du rayonnement solaire déterminé.

Selon la présente invention, une période de fort ensoleillement correspond à l'été et/ou la seconde moitié du printemps et/ou la première partie de l'automne une période de faible ensoleillement telle que l'hiver et/ou la première moitié du printemps et/ou la seconde moitié de l'automne.

Les dates correspondant aux périodes de faible ensoleillement et/ou de fort ensoleillement peuvent être enregistrées dans le dispositif de commande 100 lors de la réalisation de celui-ci ou enregistrées par l'installateur du dispositif de commande 100 lors de la mise en service du dispositif de commande 100 ou être enregistrées par l'occupant du bâtiment 10 dans lequel la présente invention est implémentée ou être mises à jour par l'intermédiaire d'un serveur informatique par l'intermédiaire d'un réseau de télécommunication auquel est relié le dispositif de commande non représenté en Fig. 1.

Selon un mode particulier de la présente invention, la saison est déterminée à partir de la température mesurée par le capteur de température 108 à heure prédéterminée ou si l'horloge est une horloge astronomique à une heure correspondant au lever du soleil voire plus ou moins une heure.

L'heure prédéterminée à laquelle la température est mesurée par le capteur de température pour déterminer la saison est par exemple comprise entre 4 et 6 heures du matin, préférentiellement à 5 heures du matin.

Si la température mesurée par le capteur de température 108 à l'heure prédéterminée ou si l'horloge est une horloge astronomique à une heure correspondant au lever du soleil voire plus ou moins une heure est inférieure à 10 degrés, la saison est considérée être l'hiver.

Si la température mesurée par le capteur de température 108 à l'heure prédéterminée ou si l'horloge est une horloge astronomique à une heure correspondant au lever du soleil voire plus ou moins une heure est supérieure à 10 degrés et inférieure à 16 degrés, la saison est considérée être le printemps ou l'automne.

Si la température mesurée par le capteur de température 108 à l'heure prédéterminée ou si l'horloge est une horloge astronomique à une heure correspondant au lever du soleil voire plus ou moins une heure est supérieure à 16 degrés, la saison est considérée être l'été.

Selon un autre mode particulier de réalisation, le lever du jour est déterminé à partir du capteur de rayonnement 102. Lorsque la mesure du rayonnement solaire dépasse une valeur comprise entre 5 à 10/Wm², il est considéré que c'est le lever du jour.

Si la température mesurée par le capteur de température 108 est inférieure à 10 degrés lorsque la mesure du rayonnement solaire dépasse une valeur comprise entre 5 à 10/Wm², la saison est considérée être l'hiver.

Si la température mesurée par le capteur de température 108 est supérieure à 10 degrés et inférieure à 16 degrés lorsque la mesure du rayonnement solaire dépasse une valeur comprise entre 5 à 10/Wm², la saison est considérée être le printemps ou l'automne.

Si la température mesurée par le capteur de température 108 est supérieure à 16 degrés lorsque la mesure du rayonnement solaire dépasse une valeur comprise entre 5 à 10/Wm², la saison est considérée être l'été.

Bien entendu, les valeurs de 10 et/ou 16 degrés sont des modes préférés de réalisation de la présente invention et l'homme du métier comprendra aisément que ces valeurs de températures peuvent varier de plus ou moins deux degrés.

La **Fig. 2** représente un schéma bloc d'un dispositif de pilotage d'au moins un dispositif d'occultation d'au moins une ouverture selon la présente invention.

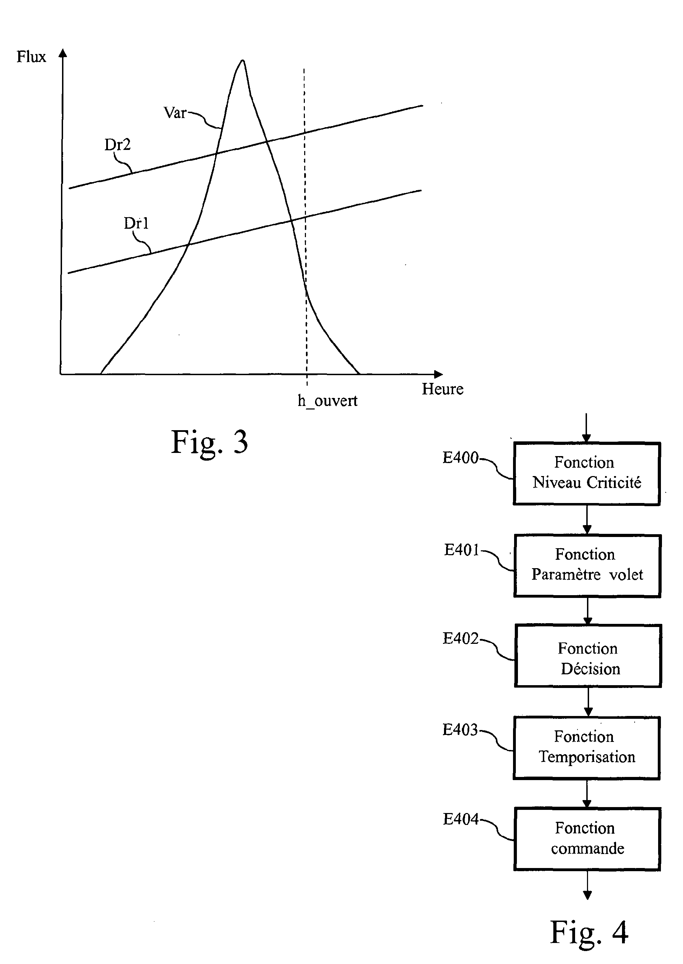

Le contrôleur 100 est adapté à effectuer à partir d'un ou plusieurs modules logiciels les étapes des algorithmes tels que décrits en référence aux Figs. 4 à 10.

Le contrôleur 100 comporte un bus de communication 201 auquel sont reliés un processeur 200, une mémoire non volatile 202, une mémoire vive 203, éventuellement une interface radio ou infrarouge 204 permettant la réception de codes issus d'une télécommande associée au contrôleur 100, une interface de commande 206 permettant la commande du dispositif d'occultation 101, et une interface capteurs 208 auxquels sont reliés les capteurs 102, 108, 106 et 109 ainsi que l'horloge.

La mémoire non volatile 202 mémorise le ou les modules logiciel(s) mettant en oeuvre l'invention, ainsi que les données permettant de mettre en oeuvre les algorithmes tels que décrits en référence aux Figs. 4 à 10.

De manière plus générale, les programmes selon la présente invention sont mémorisés dans un moyen de stockage. Ce moyen de stockage est lisible par le microprocesseur 200. Ce moyen de stockage est intégré ou non au contrôleur 100, et peut être amovible.

Lors de la mise sous tension du contrôleur 100, le ou les modules logiciel(s) selon la présente invention est ou sont transféré(s) dans la mémoire vive 203 qui contient alors le code exécutable selon la présente invention ainsi que les données nécessaires à la mise en oeuvre de l'invention.

Il est à remarquer ici que le contrôleur 100 peut être constitué d'un ou plusieurs composant(s) électronique(s).

La **Fig. 3** représente un exemple de courbe de variation du rayonnement solaire sur une période de vingt-quatre heures ainsi que des droites permettant la décision de la commande d'au moins un dispositif d'occultation d'au moins une ouverture selon la présente invention.

Sur l'axe des abscisses est représenté le temps, sur l'axe des ordonnées est représenté le rayonnement solaire mesuré par le capteur 102.

La courbe Var représente les variations du rayonnement solaire mesuré par le capteur 102 sur une période de vingt-quatre heures.

La droite Dr1 est la représentation d'une fonction affine dont le coefficient directeur alpha1 et l'ordonnée à l'origine SF1 sont fonction de la saison et d'un niveau de criticité.

La droite Dr2 est la représentation d'une fonction affine dont le coefficient directeur alpha2 et l'ordonnée à l'origine SF2 sont fonction de la période d'ensoleillement et du niveau de criticité.

Le niveau de criticité est représentatif de l'écart entre la température mesurée par le capteur 106 et un premier et un second seuils.

Le paramètre h_ouvert définit l'heure à partir de laquelle le dispositif d'occultation 101 laissera passer la totalité ou la quasi-totalité du rayonnement solaire à travers l'ouverture 103 si d'autres conditions, explicitées par la suite, sont remplies.

Lorsque le rayonnement solaire mesuré est, à un instant donné, supérieur à la valeur de rayonnement donnée par la courbe Dr2, le dispositif d'occultation 101 occulte totalement ou en quasi-totalité l'ouverture 103 si d'autres conditions, explicitées par la suite, sont remplies.

Une occultation totale ou en quasi totalité correspond à une occultation de 75 à 100% de la surface de l'ouverture 103.

Lorsque le rayonnement solaire mesuré est, à un instant donné, inférieur à la valeur de rayonnement donnée par la courbe Dr1, le dispositif d'occultation 101 laisse passer la totalité ou la quasi-totalité du rayonnement solaire à travers l'ouverture 103 si d'autres conditions, explicitées par la suite, sont remplies.

Le dispositif d'occultation 101 laisse passer la totalité ou la quasi-totalité du rayonnement solaire à travers l'ouverture 103 lorsque le dispositif d'occultation 101 occulte moins de 10% de la surface de l'ouverture 103.

Lorsque le rayonnement solaire mesuré est, à un instant donné, inférieur à la valeur de rayonnement donnée par la courbe Dr2 et supérieur à la valeur de rayonnement donnée par la courbe Dr1, le dispositif d'occultation 101 laisse passer partiellement le rayonnement solaire à travers l'ouverture 103 si d'autres conditions, explicitées par la suite, sont remplies.

Le dispositif d'occultation 101 laisse passer partiellement le rayonnement solaire à travers l'ouverture 103 lorsque le dispositif d'occultation 101 occulte entre 30 et 75% de la surface de l'ouverture 103.

La **Fig. 4** représente un diagramme illustrant l'algorithme général exécuté par le dispositif de commande d'au moins un dispositif d'occultation d'au moins une ouverture selon la présente invention.

Le présent algorithme est plus précisément exécuté par le processeur 200 du contrôleur 100.

Le présent algorithme est exécuté périodiquement, par exemple toutes les dix minutes ou avec une périodicité comprise entre deux et quinze minutes. A chaque exécution du présent algorithme, le processeur 200 obtient les différentes valeurs mesurées par les capteurs 102, 106, 108, 109, l'horodatage fourni par l'horloge 107 ainsi qu'une information.

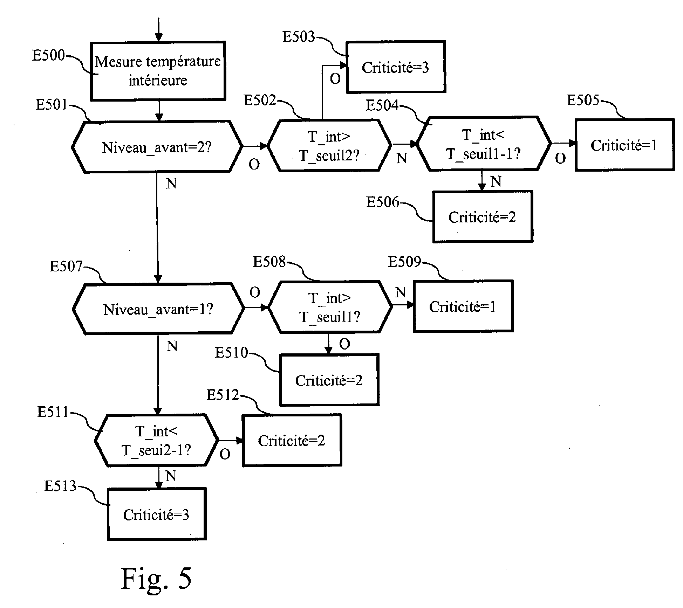

A l'étape E400, le processeur 200 lance l'exécution de la fonction niveau criticité qui sera décrite en détail en regard de la Fig. 5.

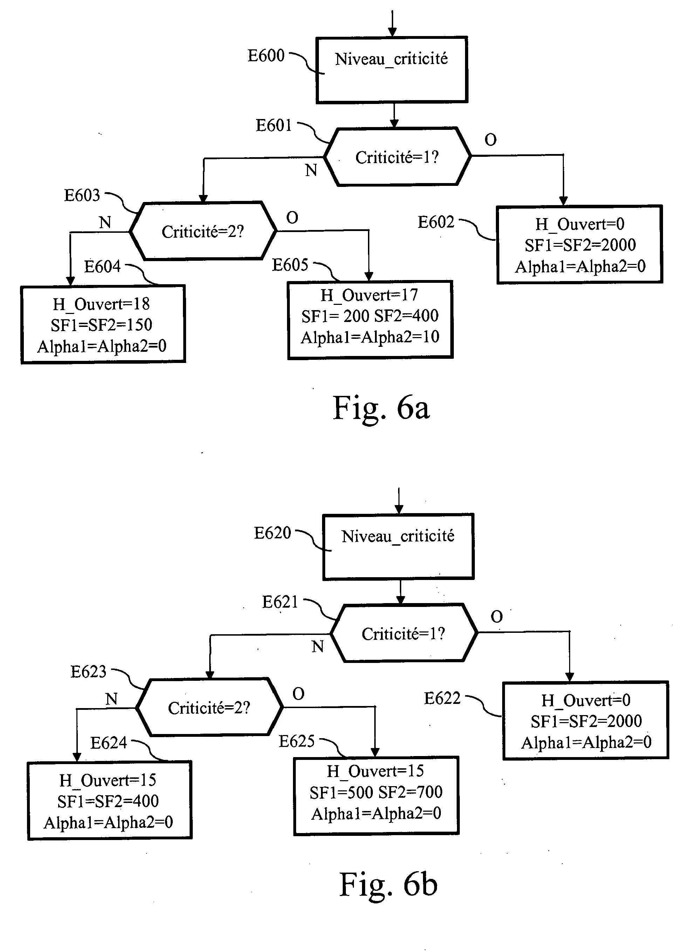

A l'étape suivante E401, le processeur 200 lance l'exécution de la fonction paramètre volet qui sera décrite en détail en regard de la Fig. 6a ou 6b.

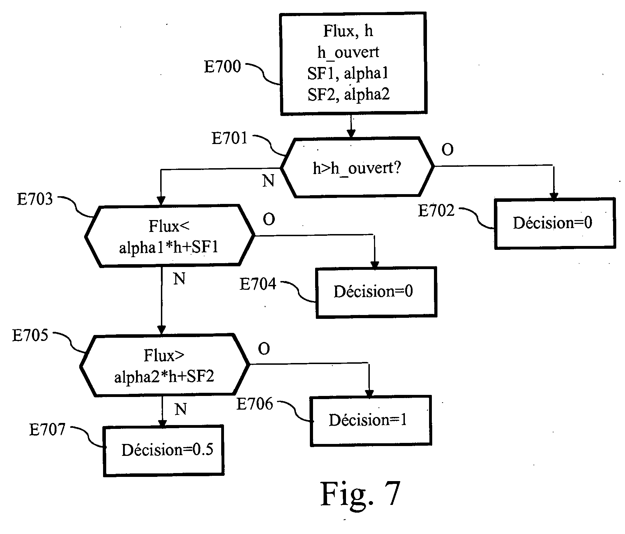

A l'étape suivante E402, le processeur 200 lance l'exécution de la fonction décision qui sera décrite en détail en regard de la Fig. 7.

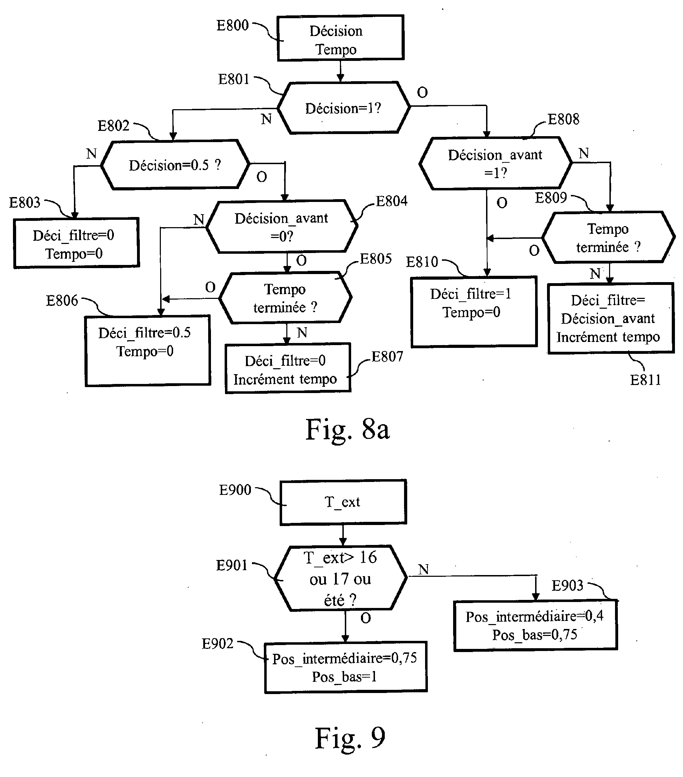

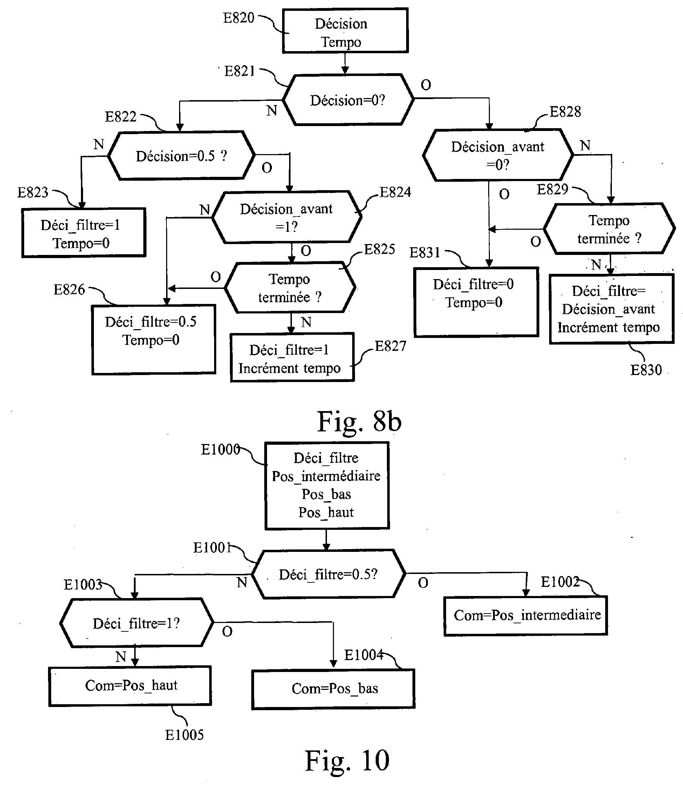

A l'étape suivante E403, le processeur 200 lance l'exécution de la fonction temporisation qui sera décrite en détail en regard de la Fig. 8a ou 8b.

A l'étape suivante E404, le processeur 200 lance l'exécution de la fonction commande qui sera décrite en détail en regard de la Fig. 10.

La **Fig. 5** représente un diagramme illustrant l'algorithme exécuté par le dispositif de commande pour l'exécution de la fonction criticité selon la présente invention.

Le présent algorithme est plus précisément exécuté par le processeur 200 du contrôleur 100.

A l'étape E500, le processeur 200 obtient la valeur de la température intérieure T_int de la pièce 10 mesurée par le capteur 106.

A l'étape suivante E501, le processeur 200 vérifie si la valeur de la variable Niveau_avant est égale à deux.

A la première exécution du présent algorithme, la variable Niveau_avant est initialisée à la valeur deux, ensuite la variable Niveau_avant est la valeur du niveau de criticité déterminée lors de la précédente exécution de la fonction criticité.

Si la valeur de la variable Niveau_avant est égale à deux, le processeur 200 passe à l'étape E502.

Si la valeur de la variable Niveau_avant est différente de deux, le processeur 200 passe à l'étape E507.

A l'étape E502, le processeur 200 vérifie si la température intérieure T_int de la pièce 10 mesurée à l'étape E500 est supérieure à un seuil prédéterminé T_seuil2.

Le seuil prédéterminé T_seuil2 dépend de la saison au cours de laquelle le présent algorithme est exécuté.

Par exemple, le seuil prédéterminé T_seuil2 est égal à 24 degrés en période de faible ensoleillement et est égal à 23 degrés en période de fort ensoleillement.

Dans un mode particulier de réalisation de la présente invention, la valeur du seuil T_seuil2 peut être augmentée ou diminuée d'un ou plusieurs degrés par l'interface homme machine du dispositif de contrôle du chauffage par exemple dans une plage comprise entre +/- 5 degrés.

Si la température intérieure T_int est supérieure au seuil prédéterminé T_seuil2, le processeur 200 passe à l'étape E503. Dans la négative, le processeur 200 passe à l'étape E504.

A l'étape E503, le processeur 200 met le niveau de criticité Niveau_criticité à la valeur trois et termine la fonction criticité.

A l'étape E504, le processeur 200 vérifie si la température intérieure T_int de la pièce 10 mesurée à l'étape E500 est inférieure à un seuil prédéterminé T_seuil1 minoré de un.

Le seuil prédéterminé T_seuil1 dépend de la saison au cours de laquelle le présent algorithme est exécuté.

Par exemple, le seuil prédéterminé T_seuil1 est égal à 22 degrés en période de faible ensoleillement, c'est-à-dire l'hiver, l'automne et le printemps et est égal à 23 degrés en période de fort ensoleillement, c'est-à- dire l'été.

Dans un mode particulier de réalisation de la présente invention, la valeur du seuil T_seuil1 peut être augmentée ou diminuée d'un ou plusieurs degrés par l'interface homme machine du dispositif de contrôle du chauffage par exemple dans une plage comprise entre +/- 5 degrés.

Si la température intérieure T_int est inférieure au seuil prédéterminé T_seuil1 minoré de un, le processeur 200 passe à l'étape E505. Dans la négative, le processeur 200 passe à l'étape E506.

A l'étape E505, le processeur 200 met le niveau de criticité Niveau_criticité à la valeur un et termine la fonction criticité.

A l'étape E506, le processeur 200 met le niveau de criticité Niveau_criticité à la valeur deux et termine la fonction criticité.

A l'étape E507, le processeur 200 vérifie si la valeur de la variable Niveau_avant est égale à un.

Si la valeur de la variable Niveau_avant est égale à un, le processeur 200 passe à l'étape E508.

Si la valeur de la variable Niveau_avant est différente de un, le processeur 200 passe à l'étape E511.

A l'étape E508, le processeur 200 vérifie si la température intérieure T_int est inférieure au seuil prédéterminé T_seuill.

Si la température intérieure T_int est inférieure au seuil prédéterminé T_seuil1, le processeur 200 passe à l'étape E509. Dans la négative, le processeur 200 passe à l'étape E510.

A l'étape E509, le processeur 200 met le niveau de criticité Niveau_criticité à la valeur un et termine la fonction criticité.

A l'étape E510, le processeur 200 met le niveau de criticité Niveau_criticité à la valeur deux et termine la fonction criticité.

A l'étape E511, le processeur 200 vérifie si la température intérieure T_int est inférieure au seuil prédéterminé T_seuil2 minoré de un.

Si la température intérieure T_int est inférieure au seuil prédéterminé T_seuil2 minoré de un, le processeur 200 passe à l'étape E512. Dans la négative, le processeur 200 passe à l'étape E513.

A l'étape E512, le processeur 200 met le niveau de criticité Niveau_criticité à la valeur deux et termine la fonction criticité.

A l'étape E510, le processeur 200 met le niveau de criticité Niveau_criticité à la valeur trois et termine la fonction criticité.

La **Fig. 6a** représente un diagramme illustrant l'algorithme exécuté par le dispositif de commande pour la détermination, en période de fort ensoleillement, de la fonction paramètre volet permettant la décision de la commande d'au moins un dispositif d'occultation d'au moins une ouverture selon la présente invention.

Le présent algorithme est plus précisément exécuté par le processeur 200 du contrôleur 100.

A l'étape E600, le processeur 200 obtient le niveau de criticité Niveau_criticité déterminé lors de l'exécution de l'algorithme de la Fig. 5.

A l'étape suivante E601, le processeur 200 vérifie si le niveau de criticité Niveau_criticité est égal à un.

Si le niveau de criticité Niveau_criticité est égal à un, le processeur 200 passe à l'étape E602. Dans la négative, le processeur 200 passe à l'étape E603.

A l'étape E602, le processeur 200 met le paramètre h_ouvert à la valeur nulle, le coefficient directeur alpha1 à la valeur nulle, le coefficient directeur alpha2 à la valeur nulle, l'ordonnée à l'origine SF1 à la valeur 2000, l'ordonnée à l'origine SF2 à la valeur 2000 et termine la fonction paramètre volet.

A l'étape E603, le processeur 200 vérifie si le niveau de criticité Niveau_criticité est égal à deux.

Si le niveau de criticité Niveau_criticité est égal à deux, le processeur 200 passe à l'étape E605. Dans la négative, le processeur 200 passe à l'étape E604.

A l'étape E604, le processeur 200 met le paramètre h_ouvert à 18 heures, le coefficient directeur alpha1 à la valeur nulle, le coefficient directeur alpha2 à la valeur nulle, l'ordonnée à l'origine SF1 à la valeur 150, l'ordonnée à l'origine SF2 à la valeur 150 et termine la fonction paramètre volet.

A l'étape E605, le processeur 200 met le paramètre h_ouvert à 17 heures, le coefficient directeur alpha1 à la valeur 10, le coefficient directeur alpha2 à la valeur 10, l'ordonnée à l'origine SF1 à la valeur 200, l'ordonnée à l'origine SF2 à la valeur 400 et termine la fonction paramètre volet.

La **Fig. 6b** représente un diagramme illustrant l'algorithme exécuté par le dispositif de commande pour la détermination, en période de faible ensoleillement, de la fonction paramètre volet permettant la décision de la commande d'au moins un dispositif d'occultation d'au moins une ouverture selon la présente invention.

Le présent algorithme est plus précisément exécuté par le processeur 200 du contrôleur 100.

A l'étape E620, le processeur 200 obtient le niveau de criticité Niveau_criticité déterminé lors de l'exécution de l'algorithme de la Fig. 5.

A l'étape suivante E621, le processeur 200 vérifie si le niveau de criticité Niveau_criticité est égal à un.

Si le niveau de criticité Niveau_criticité est égal à un, le processeur 200 passe à l'étape E622. Dans la négative, le processeur 200 passe à l'étape E623.

A l'étape E622, le processeur 200 met le paramètre h_ouvert à la valeur nulle, le coefficient directeur alpha1 à la valeur nulle, le coefficient directeur alpha2 à la valeur nulle, l'ordonnée à l'origine SF1 à la valeur 2000, l'ordonnée à l'origine SF2 à la valeur 2000 et termine la fonction paramètre volet.

A l'étape E623, le processeur 200 vérifie si le niveau de criticité Niveau_criticité est égal à deux.

Si le niveau de criticité Niveau_criticité est égal à deux, le processeur 200 passe à l'étape E625. Dans la négative, le processeur 200 passe à l'étape E624.

A l'étape E624, le processeur 200 met le paramètre h_ouvert à 15 heures, le coefficient directeur alpha1 à la valeur nulle, le coefficient directeur alpha2 à la valeur nulle, l'ordonnée à l'origine SF1 à la valeur 400, l'ordonnée à l'origine SF2 à la valeur 400 et termine la fonction paramètre volet.

A l'étape E625, le processeur 200 met le paramètre h_ouvert à 15 heures, le coefficient directeur alpha1 à la valeur nulle, le coefficient directeur alpha2 à la valeur nulle, l'ordonnée à l'origine SF1 à la valeur 500, l'ordonnée à l'origine SF2 à la valeur 700 et termine la fonction paramètre volet.

Les paramètres déterminés par la fonction paramètre volet sont, comme cela a été décrit en référence aux Figs. 6a et 6b, dépendants de la date à laquelle les mesures ont été effectuées.

La **Fig. 7** représente un diagramme illustrant l'algorithme exécuté par le dispositif de commande pour la détermination d'un paramètre de décision de la commande d'au moins un dispositif d'occultation d'au moins une ouverture selon la présente invention.

Le présent algorithme est plus précisément exécuté par le processeur 200 du contrôleur 100.

A l'étape E700, le processeur 200 obtient la valeur mesurée par le capteur de rayonnement 102, l'heure fournie par l'horloge 107 et les valeurs des variables SF1, SF2, alpha1, alpha2 et h_ouvert déterminées lors de la précédente exécution de la fonction paramètre volet décrite en référence à la Fig. 6a ou 6b.

A l'étape E701, le processeur 200 vérifie si l'heure fournie par l'horloge 107 est supérieure à la valeur de la variable h_ouvert.

Si l'heure fournie par l'horloge 107 est supérieure à la valeur de la variable h_ouvert, le processeur 200 passe à l'étape E702. Dans la négative, le processeur 200 passe à l'étape E703.

A l'étape E702, le processeur 200 met la variable Décision à la valeur nulle et termine la fonction paramètre de décision.

Lorsque la variable Décision est à la valeur nulle, le dispositif d'occultation 101 laisse passer la totalité ou la quasi-totalité du rayonnement solaire à travers l'ouverture 103 si d'autres conditions, explicitées par la suite, sont remplies.

Lorsque le rayonnement solaire mesuré est, à un instant donné, inférieur à la valeur de rayonnement donnée par la courbe Dr1, le dispositif d'occultation 101 laisse passer la totalité ou la quasi-totalité du rayonnement solaire à travers l'ouverture 103 si d'autres conditions, explicitées par la suite, sont remplies.

A l'étape E703, le processeur 200 vérifie si la valeur Flux du rayonnement mesuré par le capteur de rayonnement102 est inférieure à la droite Dr1.

Si la valeur Flux mesurée par le capteur de rayonnement 102 est inférieure à la droite Dr1, le processeur 200 passe à l'étape E704. Dans la négative, le processeur 200 passe à l'étape E705.

A l'étape E704, le processeur 200 met la variable Décision à la valeur nulle et termine la fonction paramètre de décision.

A l'étape E703, le processeur 200 vérifie si la valeur Flux mesurée par le capteur de rayonnement 102 est supérieure à la droite Dr2.

Si la valeur Flux mesurée par le capteur de rayonnement 102 est supérieure à la droite Dr2, le processeur 200 passe à l'étape E706. Dans la négative, le processeur 200 passe à l'étape E707.

A l'étape E706, le processeur 200 met la variable Décision à la valeur un et termine la fonction paramètre de décision.

Lorsque la variable Décision est à la valeur un, le dispositif d'occultation 101 occulte totalement ou en quasi-totalité l'ouverture 103 si d'autres conditions, explicitées par la suite, sont remplies.

A l'étape E707, le processeur 200 met la variable Décision à la valeur un demi et termine la fonction paramètre de décision.

Lorsque la variable Décision est à la valeur un demi, le dispositif d'occultation 101 laisse passer partiellement le rayonnement solaire à travers l'ouverture 103.

Le paramètre Décision est, comme cela a été décrit en référence aux Figs. 6a et 6b, dépendant de la date à laquelle la mesure de la valeur Flux du rayonnement a été effectuée ainsi que de la température intérieure T_int.

La **Fig. 8a** représente un diagramme illustrant l'algorithme exécuté par le dispositif de commande pour la gestion, en période de faible ensoleillement, d'une fonction pour la commande d'au moins un dispositif d'occultation d'au moins une ouverture selon la présente invention.

Le présent algorithme est plus précisément exécuté par le processeur 200 du contrôleur 100.

A l'étape E800, le processeur 200 obtient la valeur de la variable décision déterminée par l'algorithme de la Fig. 7, la valeur du compteur journalier d'actionnement du dispositif d'occultation, ainsi que la valeur d'un seuil d'une temporisation qui est par exemple égal à 30 minutes ou compris entre 15 et 60 minutes.

La valeur du compteur journalier d'actionnement du dispositif d'occultation est incrémentée d'une unité lorsque le dispositif d'occultation passe d'une position ouverte à la position intermédiaire pour revenir à la position ouverte.

La valeur du compteur journalier d'actionnement du dispositif d'occultation est incrémentée d'une unité lorsque le dispositif d'occultation passe d'une position ouverte à la position intermédiaire puis à la position fermée pour revenir à la position intermédiaire ou à la position ouverte.

La valeur du compteur journalier d'actionnement du dispositif d'occultation est incrémentée de deux unités lorsque le dispositif d'occultation passe d'une position ouverte à la position intermédiaire puis à la position fermée pour revenir à la position intermédiaire et à la position fermée.

A l'étape suivante E801, le processeur 200 vérifie si la variable Décision est égale à un.

Si la variable Décision est égale à un, le processeur 200 passe à l'étape E808. Dans la négative, le processeur 200 passe à l'étape E802.

A l'étape E802, le processeur 200 vérifie si la variable Décision est égale à un demi.

Si la variable Décision est égale à un demi, le processeur 200 passe à l'étape E804. Dans la négative, le processeur 200 passe à l'étape E803.

A l'étape E803, le processeur 200 met la variable Déci_filtre à la valeur nulle, met la variable Tempo à la valeur nulle et termine la fonction temporisation.

Lorsque la variable Déci_filtre est à la valeur nulle, le dispositif d'occultation 101 laisse passer la totalité du rayonnement solaire à travers l'ouverture 103 si d'autres conditions, explicitées par la suite, sont remplies.

A l'étape E804, le processeur 200 vérifie si la variable Décision_avant est nulle.

La variable Décision_avant est la valeur déterminée par l'algorithme de la Fig. 7 lors de la précédente exécution de l'algorithme de la Fig. 4.

Si la variable Décision_avant est nulle, le processeur 200 passe à l'étape E805. Dans la négative, le processeur 200 passe à l'étape E806.

A l'étape E805, le processeur 200 vérifie si la valeur de la variable Tempo est supérieure ou égale au seuil d'une temporisation.

Si la valeur de la variable Tempo est supérieure ou égale au seuil d'une temporisation, le processeur 200 passe à l'étape E806. Dans la négative, le processeur 200 passe à l'étape E807.

Dans un mode particulier de réalisation de la présente invention, le processeur 200 vérifie en outre à l'étape E805 si la valeur d'un compteur journalier d'actionnement du dispositif d'occultation est supérieure à la valeur trois. Si la valeur d'un compteur journalier est supérieure à trois, le processeur 200 passe à l'étape E807. Si la valeur du compteur journalier est inférieure ou égale à trois et si la valeur de la variable Tempo est supérieure ou égale au seuil d'une temporisation, le processeur 200 passe à l'étape E806.

A l'étape E806, le processeur 200 met la variable Déci_filtre à la valeur un demi, met la variable Tempo à la valeur nulle et termine la fonction temporisation.

Lorsque la variable Déci_filtre est à la valeur un demi, le dispositif d'occultation 101 laisse passer une partie du rayonnement solaire à travers l'ouverture 103 si d'autres conditions, explicitées par la suite, sont remplies.

A l'étape E807, le processeur 200 met la variable Déci_filtre à la valeur nulle, incrémente la variable Tempo à la valeur correspondant à la périodicité d'exécution de l'algorithme de la Fig. 4 et termine la fonction temporisation.

A l'étape E808, le processeur 200 vérifie si la variable Décision_avant est égale à un.

Si la variable Décision_avant est égale à un, le processeur 200 passe à l'étape E810. Dans la négative, le processeur 200 passe à l'étape E809.

A l'étape E809, le processeur 200 vérifie si la valeur de la variable Tempo est supérieure ou égale au seuil d'une temporisation.

Si la valeur de la variable Tempo est supérieure ou égale au seuil d'une temporisation, le processeur 200 passe à l'étape E810. Dans la négative, le processeur 200 passe à l'étape E811.

Dans un mode particulier de réalisation de la présente invention, le processeur 200 vérifie en outre à l'étape E809 si la valeur d'un compteur journalier d'actionnement du dispositif d'occultation est supérieure à la valeur trois. Si la valeur d'un compteur journalier est supérieure à trois, le processeur 200 passe à l'étape E811. Si la valeur du compteur journalier est inférieure ou égale à trois et si la valeur de la variable Tempo est supérieure ou égale au seuil d'une temporisation, le processeur 200 passe à l'étape E810.

A l'étape E810, le processeur 200 met la variable Déci_filtre à la valeur un, met la variable Tempo à la valeur nulle et termine la fonction temporisation.

Lorsque la variable Déci_filtre est à la valeur un, le dispositif d'occultation 101 laisse passer une partie ou ne laisse pas passer le rayonnement solaire à travers l'ouverture 103 si d'autres conditions, explicitées par la suite, sont remplies.

A l'étape E811, le processeur 200 met la variable Déci_filtre à la valeur de la variable Décision_avant, incrémente la variable Tempo à la valeur correspondant à la périodicité d'exécution de l'algorithme de la Fig. 4 et termine la fonction temporisation.

Comme cela a été décrit en référence à la Fig. 8a, si la date d'obtention de la température de la pièce du bâtiment et de la valeur du rayonnement solaire est comprise dans une période de faible ensoleillement, la commande du dispositif d'occultation est annulée pendant une période donnée si le dispositif d'occultation est, à l'itération précédente, dans une position permettant une quantité plus importante de rayonnement solaire de traverser l'ouverture que celle permise par la position du dispositif d'occultation dont la commande est annulée.

La **Fig. 8b** représente un diagramme illustrant l'algorithme exécuté par le dispositif de commande pour la gestion, en période de fort ensoleillement, d'une temporisation pour la commande d'au moins un dispositif d'occultation d'au moins une ouverture selon la présente invention.

Le présent algorithme est plus précisément exécuté par le processeur 200 du contrôleur 100.

A l'étape E820, le processeur obtient la valeur de la variable décision déterminée par l'algorithme de la Fig. 7 , la valeur du compteur journalier d'actionnement du dispositif d'occultation, ainsi que la valeur d'un seuil d'une temporisation qui est par exemple égale à 30 minutes ou comprise entre 15 et 60 minutes.

La valeur du compteur journalier d'actionnement du dispositif d'occultation est incrémentée d'une unité lorsque le dispositif d'occultation passe d'une position ouverte à la position intermédiaire pour revenir à la position ouverte.

La valeur du compteur journalier d'actionnement du dispositif d'occultation est incrémentée d'une unité lorsque le dispositif d'occultation passe d'une position ouverte à la position intermédiaire puis à la position fermée pour revenir à la position intermédiaire ou à la position ouverte.

La valeur du compteur journalier d'actionnement du dispositif d'occultation est incrémentée de deux unités lorsque le dispositif d'occultation passe d'une position ouverte à la position intermédiaire puis à la position fermée pour revenir à la position intermédiaire et à la position fermée.

A l'étape suivante E821, le processeur 200 vérifie si la variable Décision est nulle.

Si la variable Décision est égale nulle, le processeur 200 passe à l'étape E828. Dans la négative, le processeur 200 passe à l'étape E822.

A l'étape E822, le processeur 200 vérifie si la variable Décision est égale à un demi.

Si la variable Décision est égale à un demi, le processeur 200 passe à l'étape E824. Dans la négative, le processeur 200 passe à l'étape E823.

A l'étape E823, le processeur 200 met la variable Déci_filtre à la valeur un, met la variable Tempo à la valeur nulle et termine la fonction temporisation.

A l'étape E824, le processeur 200 vérifie si la variable Décision_avant est égale à un.

Si la variable Décision_avant est nulle, le processeur 200 passe à l'étape E825. Dans la négative, le processeur 200 passe à l'étape E826.

A l'étape E825, le processeur 200 vérifie si la valeur de la variable Tempo est supérieure ou égale au seuil d'une temporisation.

Si la valeur de la variable Tempo est supérieure ou égale au seuil d'une temporisation, le processeur 200 passe à l'étape E826. Dans la négative, le processeur 200 passe à l'étape E827.

Dans un mode particulier de réalisation de la présente invention, le processeur 200 vérifie en outre à l'étape E825 si la valeur d'un compteur journalier d'actionnement du dispositif d'occultation est supérieure à la valeur trois. Si la valeur d'un compteur journalier est supérieure à trois, le processeur 200 passe à l'étape E827. Si la valeur du compteur journalier est inférieure ou égale à trois et si la valeur de la variable Tempo est supérieure ou égale au seuil d'une temporisation, le processeur 200 passe à l'étape E826.

A l'étape E826, le processeur 200 met la variable Déci_filtre à la valeur un demi, met la variable Tempo à la valeur nulle et termine la fonction temporisation.

A l'étape E827, le processeur 200 met la variable Déci_filtre à la valeur un, incrémente la variable Tempo à la valeur correspondant à la périodicité d'exécution de l'algorithme de la Fig. 4 et termine la fonction temporisation.

Lorsque la variable Déci_filtre est à la valeur un, le dispositif d'occultation 101 laisse passer une partie ou ne laisse pas passer le rayonnement solaire à travers l'ouverture 103 si d'autres conditions, explicitées par la suite, sont remplies.

A l'étape E828, le processeur 200 vérifie si la variable Décision_avant est nulle.

Si la variable Décision_avant est nulle, le processeur 200 passe à l'étape E831. Dans la négative, le processeur 200 passe à l'étape E829.

A l'étape E829, le processeur 200 vérifie si la valeur de la variable Tempo est supérieure ou égale au seuil d'une temporisation.

Si la valeur de la variable Tempo est supérieure ou égale au seuil d'une temporisation, le processeur 200 passe à l'étape E831. Dans la négative, le processeur 200 passe à l'étape E830.

Dans un mode particulier de réalisation de la présente invention, le processeur 200 vérifie en outre à l'étape E829 si la valeur d'un compteur journalier d'actionnement du dispositif d'occultation est supérieure à la valeur trois. Si la valeur d'un compteur journalier est supérieure à trois, le processeur 200 passe à l'étape E831. Si la valeur du compteur journalier est inférieure ou égale à trois et si la valeur de la variable Tempo est supérieure ou égale au seuil d'une temporisation, le processeur 200 passe à l'étape E830.

A l'étape E831, le processeur 200 met la variable Déci_filtre à la valeur nulle, met la variable Tempo à la valeur nulle et termine la fonction temporisation.

A l'étape E830, le processeur 200 met la variable Déci_filtre à la valeur de la variable Décision_avant, incrémente la variable Tempo à la valeur correspondant à la périodicité d'exécution de l'algorithme de la Fig. 4 et termine la fonction temporisation.

Comme cela a été décrit en référence à la Fig. 8b, si la date d'obtention de la température de la pièce du bâtiment et de la valeur du rayonnement solaire est comprise dans une période de fort ensoleillement, la commande du dispositif d'occultation est annulée pendant une période donnée si le dispositif d'occultation est, à l'itération précédente, dans une position permettant une quantité moins importante de rayonnement solaire de traverser l'ouverture que celle permise par la position du dispositif d'occultation dont la commande est annulée.

La **Fig. 9** représente un diagramme illustrant l'algorithme exécuté par le dispositif de commande pour la détermination, en période de fort ensoleillement, de différentes positions d'au moins un dispositif d'occultation d'au moins une ouverture selon la présente invention.

Le présent algorithme est plus précisément exécuté par le processeur 200 du contrôleur 100 tous les jours en période de fort ensoleillement entre 3H30mn et 4H30mn du matin ou au lever du jour.

Le lever du jour est par exemple détecté par le capteur de rayonnement 102 lorsque celui-ci mesure un rayonnement supérieur à une valeur comprise entre 5 à 10 W/m². Le capteur de rayonnement 102, lorsque la mesure du rayonnement dépasse la valeur comprise entre 5 à 10W/m2, notifie le contrôleur 100 du lever du jour ou le contrôleur 100, en prenant périodiquement la valeur mesurée par le capteur de rayonnement détecte le lever du jour lorsque la valeur mesurée par le capteur de rayonnement dépasse la valeur comprise entre 5 à 10W/m2.

A l'étape E900, le processeur 200 obtient du capteur 108, la température extérieure T_ext.

A l'étape suivante E901, le processeur 200 vérifie si la température extérieure T_ext est supérieure à 17 degrés.

Si la température extérieure T_ext est supérieure à 17 degrés ou 16 degrés selon un mode particulier de réalisation, le processeur 200 passe à l'étape E902. Dans la négative, le processeur 200 passe à l'étape E903.

Dans un autre mode de réalisation, le processeur 200, au lieu de vérifier si la température extérieure T_ext est supérieure à 17 degrés, vérifie si la saison déterminée par la mesure de la température au lever du soleil est l'été.

Si la saison est l'été, le processeur 200 passe à l'étape E902. Dans la négative, le processeur 200 passe à l'étape E903.

A l'étape E902, le processeur 200 met la variable position intermédiaire Pos_intermédiaire à la valeur 0,75 et la variable position bas Pos_bas à la valeur 1 et termine l'algorithme de la Fig. 9.

Lorsque la variable Pos_bas est à la valeur un, le dispositif d'occultation 101 occulte totalement ou en quasi-totalité l'ouverture 103 si d'autres conditions, explicitées par la suite, sont remplies.

Lorsque la variable Pos_intermédiaire est à la valeur 0,75, le dispositif d'occultation 101occulte 75% de la surface de l'ouverture 103.

A l'étape E903, le processeur 200 met la variable position intermédiaire Pos_intermédiaire à la valeur 0,4 et la variable position bas Pos_bas à la valeur 0.75et termine l'algorithme de la Fig. 9.

Lorsque la variable Pos_bas est à la valeur 0.4, le dispositif d'occultation 101occulte 40% de la surface de l'ouverture 103.

La position Pos_haut correspondant à la configuration dans laquelle le dispositif d'occultation 101 laisse passer la totalité ou la quasi-totalité du rayonnement solaire à travers l'ouverture 103 si d'autres conditions, explicitées par la suite, sont remplies.

La **Fig. 10** représente un diagramme illustrant l'algorithme exécuté par le dispositif de commande pour la détermination d'un paramètre de commande d'au moins un dispositif d'occultation d'au moins une ouverture selon la présente invention.

Le présent algorithme est plus précisément exécuté par le processeur 200 du contrôleur 100.

A l'étape E1000, le processeur 200 obtient la valeur de la variable Déci_filtre déterminée par la fonction décrite en référence à la Fig. 8a ou 8b et les valeurs des variables Pos_bas, Pos_intermédiaire et Pos_bas déterminées par la fonction décrite en référence à la Fig. 9.

A l'étape E1001, le processeur 200 vérifie si la valeur de la variable Déci_filtre est égale à un demi.

Si la valeur de la variable Déci_filtre est égale à un demi, le processeur 200 passe à l'étape E1002. Dans la négative, le processeur 200 passe à l'étape 1001.

A l'étape E1002, le processeur 200 met la variable Com à la valeur de la variable Pos_Intermédiaire et commande le dispositif d'occultation pour que celui-ci se place à la position correspondante et interrompt l'exécution de l'algorithme.

A l'étape E1003, le processeur 200 vérifie si la valeur de la variable Déci_filtre est égale à un.

Si la valeur de la variable Déci_filtre est égale à un, le processeur 200 passe à l'étape E1004. Dans la négative, le processeur 200 passe à l'étape 1005.

A l'étape E1004, le processeur 200 met la variable Com à la valeur de la variable Pos_bas et commande le dispositif d'occultation pour que celui-ci se place à la position correspondante et interrompt l'exécution de l'algorithme.

A l'étape E1005, le processeur 200 met la variable Com à la valeur de la variable Pos_haut et commande le dispositif d'occultation pour que celui-ci laisse passer la totalité du rayonnement solaire à travers l'ouverture.

Lorsque la variable Com est égale à Pos_bas, le dispositif d'occultation 101 ne laisse pas le rayonnement solaire à travers l'ouverture.

La présente invention est décrite dans un exemple de réalisation dans lequel deux périodes d'ensoleillement sont considérées.

La présente invention est aussi applicable lorsqu'un nombre supérieur de périodes est considéré. Par exemple une période correspondant à l'hiver, une période correspondant à l'été et une période correspondant à l'automne et le printemps ou une période correspondant à l'hiver, une période correspondant à l'été, une période correspondant à l'automne et une période correspondant au printemps. De même, l'invention est aussi applicable dans une configuration selon laquelle la commande des volets selon la présente invention ne sera exécutée que dans une seule période de temps, par exemple en hiver ou en hiver et une partie de l'automne et du printemps, la présente invention ne commandant pas le dispositif d'occultation pendant l'été.

## Revendications

1. Procédé de commande d'au moins un dispositif d'occultation (101) d'au moins une ouverture (103) d'une pièce (10) d'un bâtiment, **caractérisé en ce que** le procédé comporte les étapes de :
- obtention de la température de la pièce (106) du bâtiment,
- obtention d'une valeur du rayonnement solaire (102, 110),
- comparaison de la température de la pièce du bâtiment avec au moins un seuil de température,
- détermination d'au moins un seuil de comparaison du rayonnement solaire à partir du résultat de la comparaison de la température de la pièce (106) avec ledit au moins un seuil,
- comparaison de la valeur du rayonnement solaire obtenu avec au moins le ou les seuil de comparaison du rayonnement solaire déterminé,
- commande du dispositif d'occultation (101) en fonction de la comparaison du rayonnement solaire avec le seuil de comparaison du rayonnement solaire déterminé.

2. Procédé selon la revendication 1, **caractérisé en ce que** la température de la pièce (106) du bâtiment est comparée à deux seuils de température et **en ce que** les valeurs des seuils de température dépendent de la date à laquelle la température de la pièce du bâtiment et le rayonnement solaire sont obtenus.

3. Procédé selon la revendication 1, **caractérisé en ce que** le seuil de comparaison du rayonnement solaire est en outre déterminé en fonction de la date (107) à laquelle la température de la pièce du bâtiment et le rayonnement solaire sont obtenus.

4. Procédé selon la revendication 3, **caractérisé en ce que** le seuil de comparaison du rayonnement solaire est en outre déterminé en fonction de l'heure (107) à laquelle la température de la pièce (106) du bâtiment et le rayonnement solaire (102, 110) sont obtenus.

5. Procédé selon l'une quelconque des revendications 1 à 4, **caractérisé en ce que** le procédé comporte en outre les étapes, exécutées lorsque la date à laquelle la température de la pièce du bâtiment et le rayonnement solaire sont obtenus correspond à une période de fort ensoleillement de :
- obtention de la température extérieure (108) du bâtiment à une heure prédéterminée de la journée,
- comparaison de la température extérieure (108) du bâtiment obtenue avec un seuil de comparaison de température extérieure,
et **en ce que** le dispositif d'occultation (101) est commandé pour prendre trois positions dont deux positions sont dépendantes de la comparaison de la température extérieure du bâtiment obtenue avec le seuil de comparaison de température extérieure.

6. Procédé selon l'une quelconque des revendications 1 à 5, **caractérisé en ce que** le procédé est exécuté itérativement, le dispositif d'occultation (101) étant commandé pour prendre trois positions différentes et **en ce que** le procédé comporte en outre une étape d'annulation de la commande du dispositif d'occultation qui est dépendante de la position du dispositif d'occultation lors de la précédente itération et de la date d'obtention de la température de la pièce du bâtiment et de la valeur du rayonnement solaire.

7. Procédé selon la revendication 6, **caractérisé en ce que** si la date d'obtention de la température de la pièce du bâtiment et de la valeur du rayonnement solaire est comprise dans une période de fort ensoleillement, la commande du dispositif d'occultation est annulée pendant une période donnée si le dispositif d'occultation est, à l'itération précédente, dans une position permettant une quantité moins importante de rayonnement solaire de traverser l'ouverture que celle permise par la position du dispositif d'occultation dont la commande est annulée.

8. Procédé selon la revendication 6 ou 7, **caractérisé en ce que** si la date d'obtention de la température de la pièce du bâtiment et de la valeur du rayonnement solaire est comprise dans une période de faible ensoleillement, la commande du dispositif d'occultation est annulée pendant une période donnée si le dispositif d'occultation est, à l'itération précédente, dans une position permettant une quantité plus importante de rayonnement solaire de traverser l'ouverture que celle permise par la position du dispositif d'occultation dont la commande est annulée.

9. Procédé selon l'une quelconque des revendications 1 à 8, **caractérisé en ce que** si le mode dans lequel le dispositif de commande de chauffage de la au moins une pièce est le mode de contrôle de chauffage, le procédé comporte en outre une étape de prise en compte de la température de consigne de la au moins une pièce et de modification d'au moins un seuil de température.

10. Procédé selon l'une quelconque des revendications 1 à 9, **caractérisé en ce que** le procédé comporte en outre une étape de comptage du nombre d'ouvertures ou de fermetures journalier du dispositif d'occultation d'au moins une ouverture d'une pièce du bâtiment et de limitation du nombre d'ouvertures ou de fermetures journalier du dispositif d'occultation.

11. Procédé selon la revendication 1, **caractérisé en ce que** la température de la pièce (106) du bâtiment est comparée à deux seuils de température et **en ce que** les valeurs des seuils de température dépendent de la saison à laquelle la température de la pièce du bâtiment et le rayonnement solaire sont obtenus et **en ce que** la saison est déterminée à partir de la température mesurée à l'extérieur du bâtiment à une heure prédéterminée ou à une heure correspondant au lever du soleil.

12. Dispositif de commande(100) d'au moins un dispositif d'occultation (101) d'au moins une ouverture (103) d'une pièce (10) d'un bâtiment, **caractérisé en ce que** le dispositif de commande comporte :
- des moyens d'obtention de la température de la pièce (106) du bâtiment,
- des moyens d'obtention d'une valeur du rayonnement solaire (102, 110),
- des moyens de comparaison de la température de la pièce du bâtiment avec au moins un seuil de température,
- des moyens de détermination d'au moins un seuil de comparaison du rayonnement solaire à partir du résultat de la comparaison de la température de la pièce avec ledit au moins un seuil,
- des moyens de comparaison de la valeur du rayonnement solaire obtenu avec au moins le ou les seuil de comparaison du rayonnement solaire déterminé,
- des moyens de commande du dispositif d'occultation (101) en fonction de la comparaison du rayonnement solaire avec le seuil de comparaison du rayonnement solaire déterminé.

## Patentansprüche

1. Verfahren zur Steuerung mindestens einer Verdunkelungsvorrichtung (101) mindestens eines Öffnungselements (103) eines Gebäudeteils (10), **dadurch gekennzeichnet, dass** das Verfahren die folgenden Schritte umfasst:
- Erhalten der Temperatur des Gebäudeteils (106),
- Erhalten eines Werts der Sonnenstrahlung (102, 110),
- Vergleich der Temperatur des Gebäudeteils mit mindestens einer Temperaturgrenze,
- Bestimmung mindestens einer Vergleichsgrenze der Sonnenstrahlung ausgehend von dem Resultat des Vergleichs der Temperatur des Teils (106) mit der mindestens einen Grenze,
- Vergleich des erhaltenen Werts der Sonnenstrahlung mit mindestens der oder den bestimmten Vergleichsgrenzen der Sonnenstrahlung,
- Steuerung der Verdunkelungsvorrichtung (101) in Abhängigkeit von dem Vergleich der Sonnenstrahlung mit der bestimmten Vergleichsgrenze der Sonnenstrahlung.

2. Verfahren nach Anspruch 1, **dadurch gekennzeichnet, dass** die Temperatur des Gebäudeteils (106) mit zwei Temperaturgrenzen verglichen wird, und dass die Werte der Temperaturgrenzen von dem Datum abhängen, an dem die Temperatur des Gebäudeteils und die Sonnenstrahlung erhalten werden.

3. Verfahren nach Anspruch 1, **dadurch gekennzeichnet, dass** die Vergleichsgrenze der Sonnenstrahlung ferner in Abhängigkeit von dem Datum (107), an dem die Temperatur des Gebäudeteils und die Sonnenstrahlung erhalten werden, bestimmt wird.

4. Verfahren nach Anspruch 3, **dadurch gekennzeichnet, dass** die Vergleichsgrenze der Sonnenstrahlung ferner in Abhängigkeit von der Uhrzeit (107), zu der die Temperatur des Gebäudeteils (106) und die Sonnenstrahlung (102, 110) erhalten werden, bestimmt wird.

5. Verfahren nach einem der Ansprüche 1 bis 4, **dadurch gekennzeichnet, dass** das Verfahren ferner die folgenden Schritte umfasst, die ausgeführt werden, wenn das Datum, an dem die Temperatur des Gebäudeteils und die Sonneneinstrahlung erhalten werden, einer Periode starker Sonneneinstrahlung entspricht:
- Erhalten der Außentemperatur (108) des Gebäudes zu einer vorbestimmten Uhrzeit des Tages,
- Vergleich der erhaltenen Außentemperatur (108) des Gebäudes mit einer Vergleichsgrenze der Außentemperatur,
und dass die Verdunkelungsvorrichtung (101) gesteuert wird, um drei Positionen einzunehmen, wobei zwei Positionen von dem Vergleich der erhaltenen Außentemperatur des Gebäudes mit der Vergleichsgrenze der Außentemperatur abhängen.

6. Verfahren nach einem der Ansprüche 1 bis 5, **dadurch gekennzeichnet, dass** das Verfahren iterativ ausgeführt wird, wobei die Verdunkelungsvorrichtung (101) gesteuert wird, um drei unterschiedliche Positionen einzunehmen, und dass das Verfahren ferner einen Schritt der Aufhebung der Steuerung der Verdunkelungsvorrichtung umfasst, der von der Position der Verdunkelungsvorrichtung bei dem Iterationsverfahren und dem Datum des Erhaltens der Temperatur des Gebäudeteils und des Werts der Sonnenstrahlung abhängt.

7. Verfahren nach Anspruch 6, **dadurch gekennzeichnet, dass**, wenn das Datum des Erhaltens der Temperatur des Gebäudeteils und des Werts der Sonnenstrahlung in einer Periode starker Sonneneinstrahlung liegt, die Steuerung der Verdunkelungsvorrichtung während einer gegebenen Periode aufgehoben wird, wenn die Verdunkelungsvorrichtung bei der vorhergehenden Iteration in einer Position ist, die es einer weniger großen Menge an Sonnenstrahlung ermöglicht, durch das Öffnungselement hindurchzugehen, als jene, die durch die Position der Verdunkelungsvorrichtung, deren Steuerung aufgehoben wird, ermöglicht wird.

8. Verfahren nach Anspruch 6 oder 7, **dadurch gekennzeichnet, dass**, wenn das Datum des Erhaltens der Temperatur des Gebäudeteils und des Werts der Sonnenstrahlung in einer Periode schwacher Sonneneinstrahlung liegt, die Steuerung der Verdunkelungsvorrichtung während einer gegebenen Periode aufgehoben wird, wenn die Verdunkelungsvorrichtung bei der vorhergehenden Iteration in einer Position ist, die es einer größeren Menge an Sonnenstrahlung ermöglicht, durch das Öffnungselement hindurchzugehen, als jene, die durch die Position der Verdunkelungsvorrichtung, deren Steuerung aufgehoben wird, ermöglicht wird.

9. Verfahren nach einem der Ansprüche 1 bis 8, **dadurch gekennzeichnet, dass**, wenn der Modus, bei dem die Vorrichtung das Heizen des mindestens einen Gebäudeteils steuert, der Heizkontrollmodus ist, das Verfahren ferner einen Schritt der Berücksichtigung der Solltemperatur des mindestens einen Teils und der Änderung mindestens einer Temperaturgrenze umfasst.

10. Verfahren nach einem der Ansprüche 1 bis 9, **dadurch gekennzeichnet, dass** das Verfahren ferner einen Schritt des Zählens der Anzahl von täglichen Öffnungs- oder Schließvorgängen der Verdunkelungsvorrichtung mindestens eines Öffnungselements eines Gebäudeteils und der Begrenzung der Anzahl von täglichen Öffnungs- und Schließvorgängen der Verdunkelungsvorrichtung umfasst.

11. Verfahren nach Anspruch 1, **dadurch gekennzeichnet, dass** die Temperatur des Gebäudeteils (106) mit zwei Temperaturgrenzen verglichen wird, und dass die Werte der Temperaturgrenzen von der Jahreszeit abhängen, in der die Temperatur des Gebäudeteils und die Sonnenstrahlung erhalten werden, und dass die Jahreszeit auf Basis der außerhalb des Gebäudes zu einer vorbestimmten Uhrzeit oder zu einer Uhrzeit entsprechend dem Sonnenaufgang gemessenen Temperatur bestimmt wird.

12. Vorrichtung (100) zur Steuerung mindestens einer Verdunkelungsvorrichtung (101) mindestens eines Öffnungselements (103) eines Gebäudeteils (10), **dadurch gekennzeichnet, dass** die Steuervorrichtung umfasst:
- Mittel zum Erhalten der Temperatur des Gebäudeteils (106),
- Mittel zum Erhalten eines Werts der Sonnenstrahlung (102, 110),
- Mittel zum Vergleich der Temperatur des Gebäudeteils mit mindestens einer Temperaturgrenze,
- Mittel zur Bestimmung mindestens einer Vergleichsgrenze der Sonnenstrahlung ausgehend von dem Resultat des Vergleichs der Temperatur des Teils mit der mindestens einen Grenze,
- Mittel zum Vergleich des erhaltenen Werts der Sonnenstrahlung mit mindestens der oder den bestimmten Vergleichsgrenzen der Sonnenstrahlung,
- Mittel zur Steuerung der Verdunkelungsvorrichtung (101) in Abhängigkeit von dem Vergleich der Sonnenstrahlung mit der bestimmten Vergleichsgrenze der Sonnenstrahlung.

## Claims

1. Method for controlling at least one device (101) for concealing at least one opening (103) of a room (10) in a building, **characterized in that** the method includes the steps of:
- obtaining the temperature of the room (106) in the building,
- obtaining a solar radiation value (102, 110),
- comparing the temperature of the room in the building with at least one temperature threshold,
- determining at least one solar radiation comparison threshold from the result of comparing the temperature of the room (106) with said at least one threshold,
- comparing the solar radiation value thus obtained with at least the solar radiation comparison threshold or thresholds thus determined,
- controlling the concealing device (101) as a function of the comparison of the solar radiation value with the solar radiation comparison threshold thus determined.

2. Method according to Claim 1, **characterized in that** the temperature of the room (106) in the building is compared to two temperature thresholds and **in that** the values of the temperature thresholds depend on the date at which the temperature of the room in the building and the solar radiation value are obtained.

3. Method according to Claim 1, **characterized in that** the solar radiation comparison threshold is further determined as a function of the date (107) at which the temperature of the room in the building and the solar radiation value are obtained.

4. Method according to Claim 3, **characterized in that** the solar radiation comparison threshold is further determined as a function of the time (107) at which the temperature of the room (106) in the building and the solar radiation value (102, 110) are obtained.

5. Method according to any one of Claims 1 to 4, **characterized in that** the method further includes the steps, executed when the date at which the temperature of the room in the building and the solar radiation value are obtained corresponds to a very sunny period, of:
- obtaining the temperature (108) outside the building at a predetermined time of day,
- comparing the temperature (108) outside the building thus obtained with an outside temperature comparison threshold,
and **in that** the concealing device (101) is commanded to assume three positions of which two are dependent on the comparison of the temperature outside the building thus obtained with the outside temperature comparison threshold.

6. Method according to any one of Claims 1 to 5, **characterized in that** the method is executed iteratively, the concealing device (101) being commanded to assume three different positions, and **in that** the method further includes a step of cancelling the command of the concealing device that is dependent on the position of the concealing device during the preceding iteration and the date of obtaining the temperature of the room in the building and the solar radiation value.

7. Method according to Claim 6, **characterized in that** if the date of obtaining the temperature of the room in the building and the solar radiation value is in a very sunny period, the command of the concealing device is cancelled during a given period if in the preceding iteration the concealing device is in a position allowing a smaller quantity of solar radiation to pass through the opening than that allowed by the position of the concealing device the command of which is cancelled.

8. Method according to Claim 6 or 7, **characterized in that** if the date of obtaining the temperature of the room in the building and the solar radiation value is in a not very sunny period, the command of the concealing device is cancelled during a given period if in the preceding iteration the concealing device is in a position allowing a greater quantity of solar radiation to pass through the opening than that allowed by the position of the concealing device the command of which is cancelled.

9. Method according to any of Claims 1 to 8, **characterized in that**, if the mode in which the device controlling heating of the at least one room is the heating control mode, the method further includes a step of taking account of the set point temperature of the at least one room and of modifying at least one temperature threshold.

10. Method according to any of Claims 1 to 9, **characterized in that** the method further includes a step of counting the daily number of openings or closings of the device for concealing at least one opening of a room in the building and limiting the daily number of openings and closings of the concealing device.

11. Method according to Claim 1, **characterized in that** the temperature of the room (106) in the building is compared to two temperature thresholds and **in that** the values of the temperature thresholds depend on the season in which the temperature of the room in the building and the solar radiation value are obtained and **in that** the season is determined from the temperature measured outside the building at a predetermined time or at a time corresponding to sunrise.

12. Device (100) for controlling at least one device (101) for concealing at least one opening (103) of a room (10) in a building, **characterized in that** the control device includes:
- means for obtaining the temperature of the room (106) in the building,
- means for obtaining a solar radiation value (102, 110),
- means for comparing the temperature of the room in the building with at least one temperature threshold,
- means for determining at least one solar radiation comparison threshold from the result of comparing the temperature of the room with said at least one threshold,
- means for comparing the solar radiation value thus obtained with at least the solar radiation comparison threshold or thresholds thus determined,
- means for controlling the concealing device (101) as a function of the comparison of the solar radiation value with the solar radiation comparison threshold thus determined.
